# EUROPEAN PATENT APPLICATION

(11) **EP 0 969 661 A1**
(43) Date of publication of application: **05.01.2000**
(21) Application number: 97907415.0
(22) Date of filing: 21.03.1997
(51) Int. Cl.: H04N 5/44

(54) **AV APPARATUS, METHOD FOR USING AV APPARATUS, AND AV SYSTEM**

(71) Applicant: Hitachi, Ltd., Chiyoda-ku, Tokyo 101 (JP)
(72) Inventor: AKAMATSU, Chiyo, Yokohama-shi Kanagawa 244 (JP); HASEGAWA, Tsukasa, Hiratsuka-shi Kanagawa 254 (JP); GOTO, Hidefumi, Yokosuka-shi Kanagawa 239 (JP); OHARA, Yasunori, Hitachinaka-shi Ibaraki 312 (JP); NOGUCHI, Takaharu, Yokohama-shi Kanagawa 244 (JP)
(74) Representative: Calderbank, Thomas Roger
(86) International application number: JP9700934
(87) International publication number: WO9843416

(57) **Abstract**

In an AV apparatus system in which various AV apparatuses including satellite broadcast receivers 100a and 100b, a recording apparatus 110 and a monitor 120 are connected by a control bus 10, a timed reservation section 104 or 114 including a reservation data management section 105 or 115 are provided in each AV apparatus.

An AV apparatus intending to set and execute a timed reservation stores that reservation into the reservation data management section 105 and, at the same time, either requests another AV apparatus, which is to operate in conjunction at the time of executing the reservation, to store, or directly writes, the reservation into the reservation data management section 115.

## Description

### Technical Field

The present invention relates to a technology regarding an audio and visual apparatus system (hereinafter AV apparatus system) consisting of at least two AV apparatuses, such as audio apparatuses and video apparatuses, connected by a bus to one another, and more particularly to a technique for the use of apparatuses in an AV apparatus system, where a plurality of AV apparatuses are to be operated in conjunction with one another, to secure the availability of that AV apparatus working in conjunction.

### Background Art

Nowadays, as communication systems consisting of sets of AV apparatus, such as video taperecorders (hereinafter VTRs) and television receivers (hereinafter TVs), and information processing apparatuses connected by a control bus which is capable of carrying out communication of data and control signals in mixed presence, and transmitting and receiving the data and the control signals among the apparatuses, communication systems using an IEEE 1394 serial bus or a USB (Universal Serial Bus) are proposed.

An IEEE 1394 serial bus can accomplish both isochronous transfers, i.e. consecutive transfers of data such as digital AV signals at a constant transfer rate, and asynchronous transfers, i.e. transfers of control signals such as connection control commands as required.

A USB is capable of the aforementioned isochronous transfers, control transfers used for transmission and reception of messages, and bulk transfers used for transfers of large quantities of data though the transfer rate is not guaranteed.

In a system using an IEEE 1394 serial bus or a USB, node IDs are automatically allocated according to the form of connection of each apparatus. If a new apparatus of is added to or any apparatus is withdrawn from the system, bus resetting is effected, and node IDs are reallocated automatically to match the new forms of connection.

Furthermore, standardization is in progress for the AV/C Digital Interface Command Set of control signals for controlling various kinds of AV apparatuses from outside on an IEEE 1394 serial bus.

If, in such a situation, a system is built up in which various kinds of AV apparatuses are connected by an IEEE 1394 serial bus or a USB and data and control signals are communicated, any random AV apparatus may conceivably control another AV apparatus. One of the typical of its functions is conceivably one to secure the availability of an apparatus, e.g. a timed reservation function for video recording or playback.

However, the conventional timed reservation function allows the operator to make a timed reservation with each of the apparatuses involved, and each set V apparatus, in no way concerned with any other AV apparatus, merely executes an action such as outputting or starting to record AV data including video information and audio information irrespective of the state of use of the other AV apparatus. Therefore, when a timer reservation was to be set, the operator had to check for himself whether or not each apparatus would be available for operation when the reserved hours came.

Furthermore, where a chargeable program such as a satellite broadcast program was to be recorded by timed reservation and an unexpected extension occurred in the program duration, even if the satellite broadcast receiver itself could adjust itself to the contingency, the VTR to record that program would end the recording when the preset ending time arrived even though the unexpected extension of the duration occurred and made it desirable to extend the recording hours.

An object of the present invention is to provide, in order to solve these problems, a technology for apparatus use in AV apparatus systems to enable a plurality of AV apparatuses in conjunction with one another to easily make timed reservations and accomplish reservation management.

### Disclosure of the Invention

In order to solve the aforesaid problems, the methods described below are to be implemented, and AV apparatuses and AV apparatus systems to realize it are provided.

When information on apparatus use such as timed reservation is indicated to a first AV apparatus and a second AV apparatus, the apparatus to operate in conjunction with the first AV apparatus when using a bus, is determined, the second AV apparatus is inquired of via the bus connecting the two sets about the availability or unavailability of the second apparatus from a starting time until an ending time between which that second AV apparatus is to be used.

The second AV apparatus, in response to this inquiry, determines the availability or unavailability of the second AV apparatus by collating it with apparatus use information on the second AV apparatus stored in an apparatus use information storage means, and gives a reply to the first AV apparatus.

If the second AV apparatus is available for the designated period of time, the first AV apparatus will store apparatus use information into the apparatus use information storage means of the first AV apparatus, and also store that apparatus use information into the apparatus use information storage means of the second AV apparatus. On the other hand, if it is unavailable, the first AV apparatus will either cancel that planned use or inquire of the second AV apparatus about the reason for the unavailability and, if there is any conflicting request for the use of the apparatus, perform processing, such as determining which request should be validated.

Execution of the use of any apparatus is notified by the first AV apparatus and the second AV apparatus to each other at the time of, or a few minutes before, the execution of the use of the apparatus, to be followed by the execution of the use of the apparatus.

Further, when any detail of the use of the first AV apparatus is to be changed, the first AV apparatus is caused to read out the apparatus use information already stored in the apparatus use information storage means of the first AV apparatus and to display it on a display means. And it notifies the second AV apparatus, to be affected by the change, of the change by altering the apparatus use information as desired. The second AV apparatus reads apparatus use information on the second AV apparatus out of its apparatus use information storage means and alters the apparatus use information accordingly.

### Brief Description of Drawings

FIG. 1 shows an example of configuration of timed reservation in an AV apparatus system, which is one mode of carrying out the present invention.
FIG. 2 shows an example of configuration of reservation data to be managed in the AV apparatus serving as an input apparatus.
FIG. 3 shows an example of configuration of reservation data to be managed in the AV apparatus serving as a related apparatus.
FIG. 4 shows actual examples of configuration of reservation data to be managed in the input apparatus or the related apparatus in the AV apparatus system.
FIG. 5 is a flowchart of timed reservation processing.
FIG. 6 shows an example of screen on the input apparatus in timed reservation processing.
FIG. 7 shows an example of screen on the input apparatus when a notice is given that timed reservation processing cannot be executed.
FIG. 8 shows an example of screen on the input apparatus displaying the situation of reservations in the related apparatus in timed reservation processing.
FIG. 9 shows an example of screen on the input apparatus when a notice is given that there is a conflicting reservation in the designated period of time in timed reservation processing.
FIG. 10 shows an example of screen on the input apparatus when the list of timed program reservations is displayed.
FIG. 11 shows an example of screen on the related apparatus when the list of timed program reservations is displayed.
FIG. 12 is a flowchart of checking of reservation particulars by each AV apparatus when the AV apparatus system is altered in configuration.
FIG. 13 shows an example of screen when a notice is given of the unavailability of either the input apparatus or the related apparatus.
FIG. 14 shows examples of configuration of command packet and response packet for communication between AV apparatuses connected by a control bus.
FIG. 15 shows an example of situation of timed reservations where a chargeable program is to be recorded by timed reservation.
FIG. 16 shows an example of screen when a notice is given of conflict between the next reserved programs in connection with a rescheduling of broadcast programs.
FIG. 17 shows an example of configuration of an AV apparatus system, which is another mode of carrying out the present invention.
FIG. 18 shows an example of screen on the input apparatus when the list of timed program reservations is displayed.
FIG. 19 shows an example of screen on the related apparatus when the list of timed program reservations is displayed.
FIG. 20 shows an example of configuration of an AV apparatus system, which is another mode of carrying out the present invention.
FIG. 21 shows actual examples of configuration of reservation data to be managed in AV apparatuses in the AV apparatus system.

### Best Modes for Carrying Out the Invention

To explain the present invention in greater detail, it will be described with reference to the accompanying drawings. Incidentally, although the modes of implementation described below concern cases of securing the availability of an apparatus in a timed reservation out of various techniques for securing the availability of the bus, there is no restriction to timed reservations, but any case can be covered as long as the availability of an apparatus can be secured and a conflict between requests for the use of the same apparatus can be avoided.

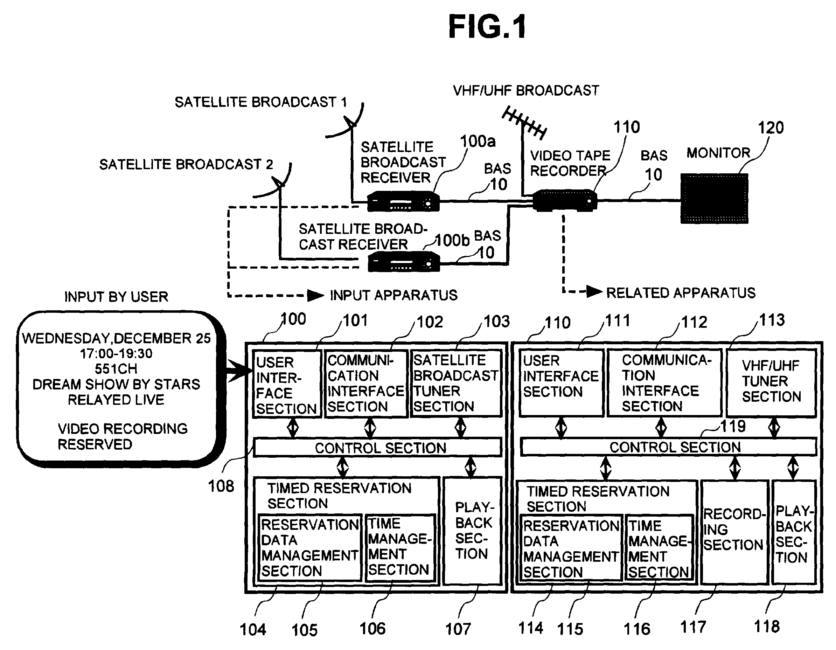

FIG. 1 shows an example of configuration of timed reservation in an AV apparatus system, which is cited here to illustrate the present invention.

In this example, there is configured an AV apparatus system comprising satellite broadcast receivers 100a and 100b for receiving broadcast programs utilizing communication satellites; a recording apparatus 110 which may be a video taperecorder for recording AV data including video and audio data on a magnetic tape or a DVD, HD or MO or the like for recording AV data on a magnetic disk or an optical disk; or a monitor 120 which may be a TV receiver or a personal computer display unit, connected by a bus 10 which may be an IEEE 1394 serial bus or a USB.

Described below is a method to have a timed reservation made, when the operator instructs the satellite broadcast receiver 100a to make a reservation of "timed recording of a satellite broadcast program by the recording apparatus 110," and the reservation executed by the satellite broadcast receiver 100a and the recording apparatus 110.

First will be described the configurations of the satellite broadcast receiver 100a and the recording apparatus 110. Incidentally, the satellite broadcast receiver 100b has the same configuration as the satellite broadcast receiver 100a.

The satellite broadcast receiver 100a consists of a user interface section 101 using an input instruction device, such as a remote control unit or a tablet, for conversing with the operator such as receiving timed reservation setting and display instructions; a communication interface section 102 for communicating AV data and control signals with other apparatuses (the satellite broadcast receiver 100b, the recording apparatus 110 and the monitor 120 in this case) via the bus 10; a satellite broadcast tuner section 103 for receiving satellite broadcast programs; a timed reservation section 104 for processing timed reservations; a playback section 107 for playing back received broadcast programs on the monitor 120; and a control section 108 for controlling the operations of various sections in the satellite broadcast receiver 100a.

The timed reservation section 104 consists of a reservation data management section 105 for managing data regarding timed reservations and a time management section 106 for giving a notice by issuing an alarm or otherwise when the time of reserved operation arrives. The recording apparatus 110 consists of a user interface section 111 using an input instruction device, such as a remote control unit or a tablet, for conversing with the operator such as receiving recording or playback, timed reservation setting and display instructions; a communication interface section 112 for communicating AV data and control signals with other apparatuses (the satellite broadcast receivers 100a and 100b, and the monitor 120 in this case) via the bus 10; a VHF/UHF broadcast tuner section 113 for receiving VHF/UHF broadcast programs; a timed reservation section 114 for processing timed reservations of VHF/UHF broadcast programs; a recording section 117 for recording AV data such as broadcast programs on a recording medium such as a magnetic tape or an optical disk; a playback section 118 for playing back AV data recorded on a recording medium; and a recording apparatus control section 119 for controlling the operations of the recording apparatus 110.

The timed reservation section 114 consists of a reservation data management section 115 for managing data regarding timed reservations and a time management section 116 for giving a notice by issuing an alarm or otherwise when the time of reserved operation arrives.

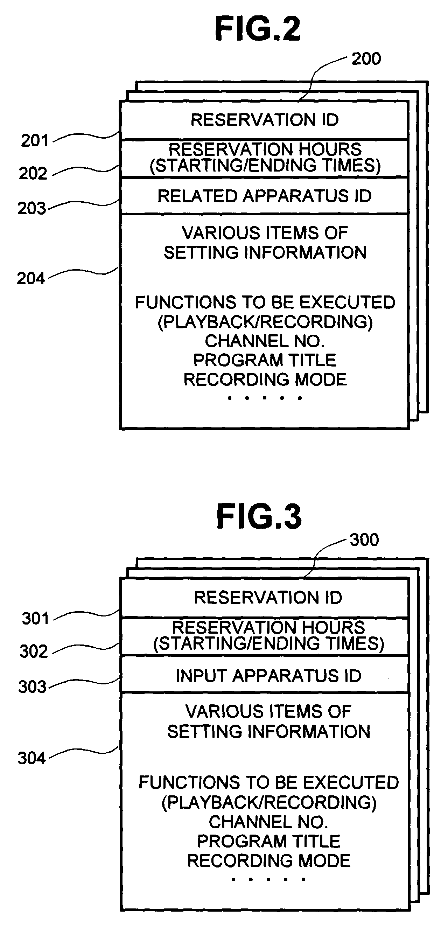

Next will be described, with reference to FIGS. 2 and 3, one configuration of the reservation data to be managed by the time management section 105 of the above-mentioned satellite broadcast receiver 100a and the reservation data management section 115 of the recording apparatus 110.

First in the satellite broadcast receiver 100a (input apparatus) instructed by the operator to make a timed reservation in this mode of implementation, apparatus use information has a data configuration consisting of a reservation ID 201, reservation hours (starting/ending times) 202, a related apparatus ID 203, and various setting information 204, which constitute a set of reservation data for managing one reservation.

The reservation ID 201, an identifier for identifying reservation data to be managed in the input apparatus 100a, allocates a unique number according to the sequence of setting or time sequence. The reservation hours 202 are the requested reservation hours (starting/ending times). The related apparatus ID 203 is the inherent identifier of an apparatus operating in conjunction during the execution of the reservation (related apparatus). In this mode of implementation, it is the inherent identifier of the recording apparatus 110. If no apparatus is required to operate in conjunction, the own ID (the ID of the satellite broadcast receiver 100a) or a value that is not used as an ID is set. Where there are a plurality of related apparatuses, IDs for all those apparatuses are set. The various setting information 204 comprises items of information required for the setting and execution of a timed reservation by the input apparatus and the related apparatus in conjunction, including for instance the type of the function to be executed, such as playback or recording, channel number, recording speed such as SP, LP or EP, and the recording mode, such as analog or digital.

Next, the recording apparatus 110 (related apparatus) operating in conjunction with the satellite broadcast receiver 100a at the time of executing a reservation, one reservation is managed in a data configuration consisting of a reservation ID 301, reservation hours (starting/ending times) 302, an input apparatus ID 303, and various setting information 304 for the related apparatus.

The reservation ID 301, an identifier for identifying reservation data to be managed in the related apparatus 110, allocates a unique number according to the sequence of setting or time sequence. The reservation hours 302 are the requested reservation hours (starting/ending times). The input apparatus ID 303 is the inherent identifier of the apparatus accepting a reservation and operating in conjunction during the execution of the reservation (input apparatus). In this mode of implementation, it is the inherent identifier of the satellite broadcast receiver 100a. If no apparatus is required to accept a reservation and operate in conjunction, the ID of the recording apparatus 110 or a value that is not used as an ID is set. The various setting information 304 comprises items of information required for the setting and execution of a timed reservation by the recording apparatus 110, such as playback or recording, channel number, recording speed such as SP, LP or EP, and the recording mode, such as analog or digital.

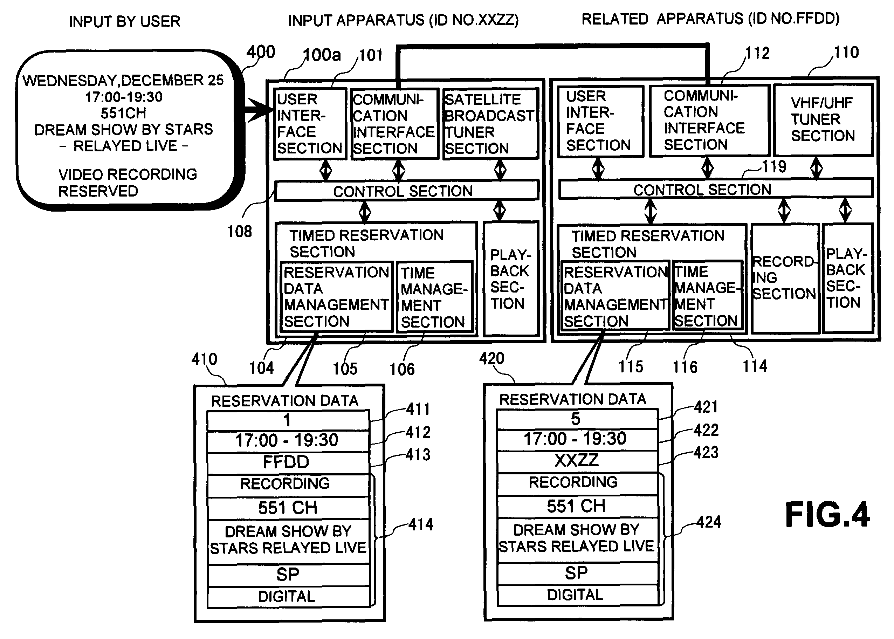

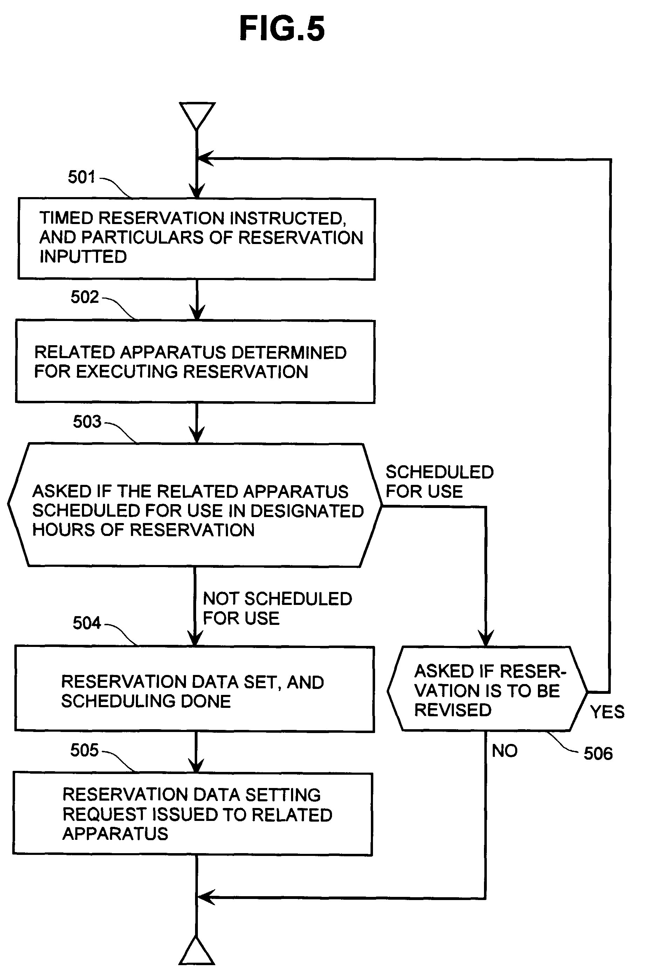

Next will be described, with reference to FIG. 4 and FIG. 5, the procedure of processing a timed reservation with the above-described AV apparatus system.

First, the operator inputs an instruction for a timed reservation and reservation contents 400 (step 501) to the satellite broadcast receiver 100a via an input instructing device such as a remote control unit or an input tablet, and determines, if the execution of that reservation is to be accomplished in conjunction with any other apparatus than the satellite broadcast receiver 100a (the recording apparatus 110 in this mode of implementation), the related apparatus to be controlled by it (step 502).

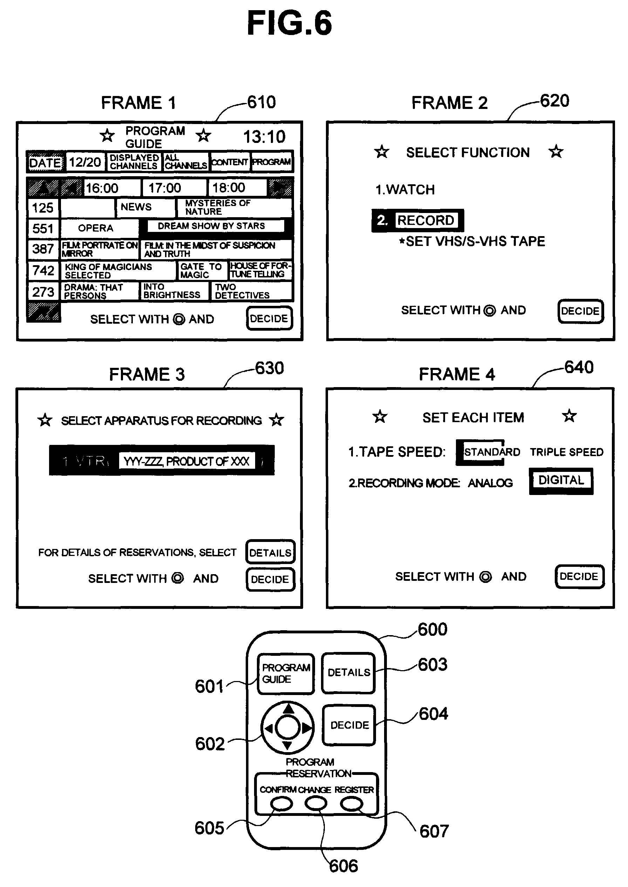

FIG. 6 shows an example of frame displayed on the monitor 120 or the liquid crystal screen of a remote control unit at step 501 and step 502. First, when the operator designates a program guide indicator on the remote control unit 600, a frame 610 showing a program guide is displayed. When the program to be reserved is selected on the frame 610 using a direction indicator 602 and registration is instructed with a registration indicator 606, a frame 620 for the selection of the function to be executed is displayed. On the frame 620, the function to be executed (playback or recording) as reserved is selected using the direction indicator 602, and decision is instructed with a decision indicator 604. If recording is selected here, a frame 630 for selection of the recording apparatus, i.e. the related apparatus, is displayed. On the frame 630 is displayed information on apparatuses having a video recording function out of the apparatuses connected to the bus 10 (the type, such as VTR or DVD, the manufacturer's name and so forth).

Since there is only one recording apparatus on the bus in the case of the system in this mode of implementation (FIG. 1), information on the recording apparatus 110 alone is displayed.

If decision is instructed here with the decision indicator 604, a frame 640 for the selection of the tape speed and the recording mode is displayed. As the tape speed and the recording mode are selected on the frame 640 and decision is instructed with the decision indicator 604, information setting concerning recording reservation is completed.

Next, the timed reservation section 104 in the satellite broadcast receiver 100a inquires of the timed reservation section 114 of the related apparatus (recording apparatus 110) via the control section 108, the communication interface section and the bus whether or not any use is scheduled for designated reservation, i.e. whether or not reservation data can be stored into the reservation data management section 115 (step 503). Whereas this inquiry here is made by transmitting information on at least the starting time and the ending time of the intended use of the related apparatus, the contents of the reservation data themselves may as well be transmitted simultaneously with the inquiry about the scheduled of use.

If, as a result, a notice of the absence of any scheduled use in the designated hours is received from the recording apparatus 110, the reservation data management section 105 prepares and manages reservation data 410 on the basis of the inputted reservation contents 400 (step 504). The reservation data 410 here consist of reservation data ID 411 in the input apparatus 100a, reserved hours 412 in reservation contents 400, the inherent ID 413 of the related apparatus 110 on the bus, and various information 414 including the function to be executed, channel number, program title, recording speed, and the recording mode.

At the same time, the input apparatus 100a transmits necessary information for the preparation of reservation data 420 to the timed reservation section 114 of the related apparatus 110, and issues a request for setting of reservation data 400? (Step 505). In response to this, the timed reservation section 114 of the related apparatus 110, having received the setting request, prepares the reservation data 420, and manages it in the reservation data management section 115.

The reservation data 420 here consist of reservation data ID 421 in the related apparatus 110, reserved hours 422 in reservation contents 400, the inherent ID 423 of the input apparatus 100a on the bus, and various setting information 424 including the function to be executed, channel number, program title, recording speed, and the recording mode.

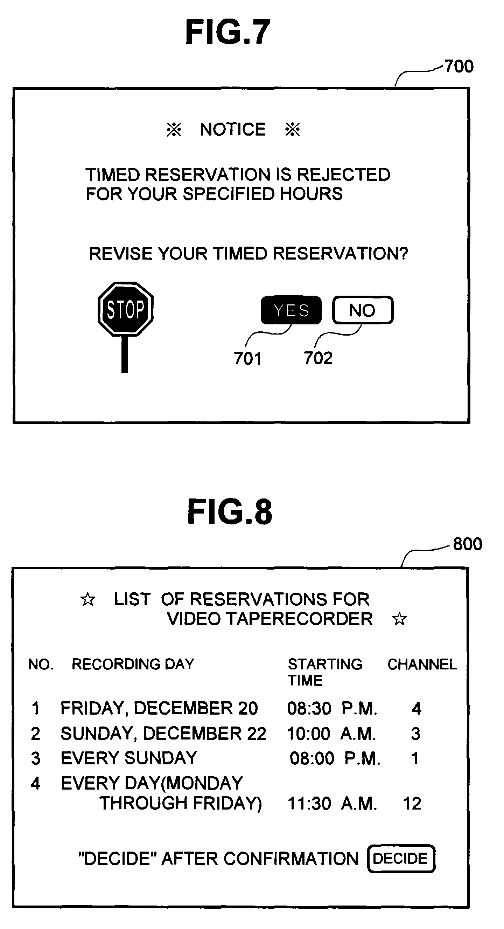

If, at step 503, a notice of the presence of any scheduled use in the designated hours is received from the related apparatus 110, the operator is asked if the timed reservation is to be remade (step 506) and, if it is to be remade, the processing will return to step 501 or, if it is not to be remade, the processing will be terminated. FIG. 7 shows an example of screen when an inquiry is made with the operator. If an option 701 is indicated on this frame 700, the processing will return to step 501 or, if an option 702 is indicated, the processing will be terminated.

As regards information concerning the related apparatus 110 here at step 502, the control section 108 of the input apparatus 100a acquires and manages an apparatus which is present on the bus at the time of bus resetting or regularly and is to become the related apparatus. If there is only one related apparatus on the bus 10, that apparatus can be automatically determined to be the related apparatus 110. It is also possible, if there are two or more on the bus 10, to indicate those apparatuses on the monitor 120 or the liquid crystal frame of a remote control unit, and let the operator determine one every time a reservation is made. Alternatively, it is also possible to predetermine an order of precedence for related apparatuses managed by the control section 108, have them memorized by the control section 108, and determine the apparatus automatically by referring to that memory. Or it is also possible to determine automatically an appropriate apparatus out of related apparatus information managed by the control section 108 according to the recording medium (VHS tape, SVHS tape, photomagnetic disk or the like) and the recording mode (analog, digital or the like) designated by the operator. For instance, if the operator designates digital recording, the control section 108 will select out of related apparatus information what permits digital recording and is mounted with an SVHS tape, and uses it as the related apparatus.

It is also possible at step 503 for the satellite broadcast receiver 100a to read out reservation data 300 managed by the timed reservation section 114 of the related apparatus 110, and check if there is any use scheduled for the designated reservation hours.

FIG. 8 shows a frame 800, which is an example of display by the input apparatus 100a of the situation of reservations in the related apparatus 110.

Or at step 505, it is also possible for the reservation data management section 105 of the satellite broadcast receiver 100a to prepare reservation data 420, transmit them to the timed reservation section 114 of the recording apparatus 110, and to have the reservation data 420 set in the reservation data management section 115 in the timed reservation section 114 of the related apparatus 110. Further, it is also possible for the control section 108 in the satellite broadcast receiver 100a to directly set the reservation data 420 in the reservation data management section 115 of the related apparatus 110.

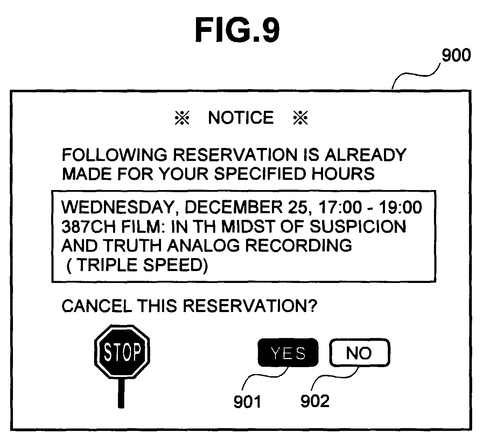

Or at step 506, if there already is a scheduled use on the part of the recording apparatus 110, it is also possible to notify the operator of that schedule to let him decide which reservation is to be given priority. In this case, regarding the canceled reservation, it is so disposed that the apparatus whose reservation is canceled delete all the reservation data in the apparatuses having reservation data concerning the reservation. FIG. 9 shows a frame example 900 of a case in which the operator is notified of a conflict between reservations and is asked which should be given priority. If an option 901 is indicated on the frame 900, the timed reservation section 104 of the satellite broadcast receiver 100a transmits to the timed reservation section 114 of the recording apparatus 110 to delete the reservation which is already set. In response, the timed reservation section 114 of the recording apparatus 110 acquires the reservation data concerning the reservation from the reservation data management section 115, deletes the reservation data, and at the same time deletes all the reservation data in the apparatuses having reservation data concerning the reservation.

If an option 902 is indicated, the timed reservation instructed on the frames 610 to 640 are canceled. Various mediatory manners of processing for conflicting reservations are also possible obviously, such as storing in advance an order of precedence in the control section 108 of the input apparatus 100a according to which the reservation of a chargeable program, such as a satellite broadcast program, is automatically given priority, and the contents of the stored information are referenced at the time of making a timed reservation.

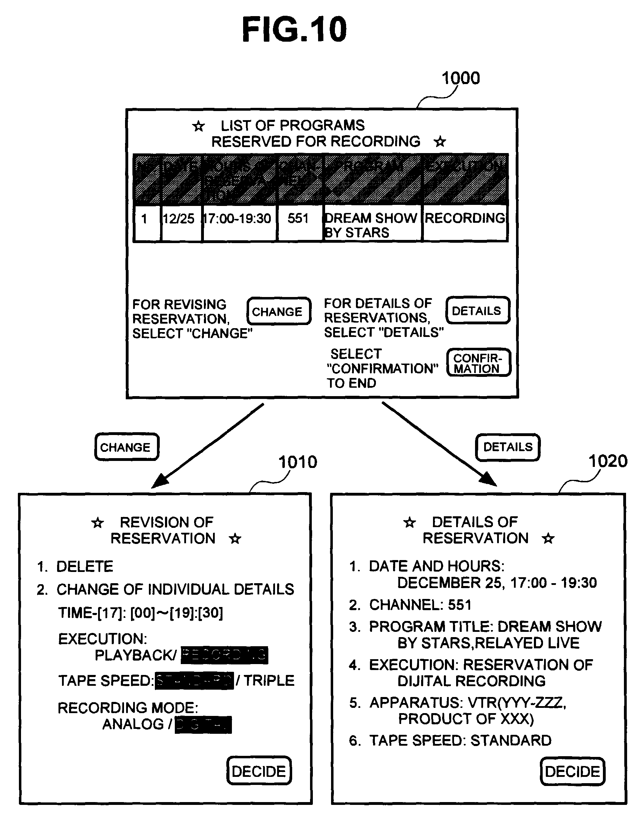

Next is shown in FIG. 10 an example of screen on the input apparatus, i.e. the satellite broadcast receiver 100a, where a list of the reservation contents for which timed reservations are already set is displayed.

First, when the operator designates a confirmation indicator 605 on the remote control unit 600, the timed reservation section 104 reads reservation data 200 stored in the reservation data management section 105 of the satellite broadcast receiver 100a, and displays a frame 1000 on the monitor 120 via the user interface section 101. On the frame 100 are displayed for each reservation such items as the reservation number, date, reservation hours, channel number, program title, and the function to be executed. When a detail indicator 603 is designated to see more details, a frame 1020 is displayed. On the frame 1020 are displayed contents including items which could not be displayed on the frame 1000.

Next will be described the processing of a change in the contents of an already set timed reservation. When any reservation is selected from the contents displayed on the frame 1000, and a change is instructed with a change indicator 606, a reservation change frame 1010 appears. As the deletion of a reservation or a change in hours, the function to be executed or the like is instructed on the frame 1010, the timed reservation section 104 in the satellite broadcast receiver 100a deletes or alters pertinent contents concerning the reservation stored in the reservation data management section 105. And it requests the timed reservation section 114 of another apparatus operating in conjunction at the time of executing a reservation (the recording apparatus 110 in this case) to delete or alter pertinent contents of reservation data concerning the reservation.

In response, the timed reservation section 114 of the recording apparatus 110 retrieves reservation data regarding the reservation stored in the reservation data management section 115, and deletes or alters pertinent contents thereof. It is also possible here for the timed reservation section 104 of the satellite broadcast receiver 100a to acquire reservation data stored in the reservation data management section 116 within the recording apparatus 110, retrieve reservation data concerning the reservation and, after deleting or altering pertinent contents thereof, rewrite them into the reservation data management section 115.

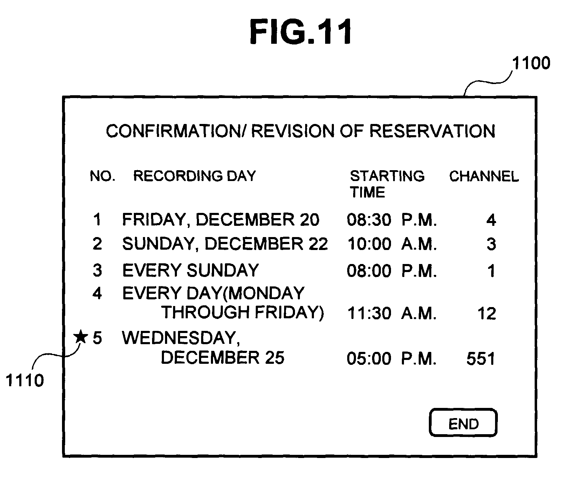

Further in FIG. 11 is shown an example of screen on the related apparatus, i.e. the recording apparatus 110, where a list of the reservation contents for which timed reservations are already set is displayed.

When the operator instructs to confirm or alter reservation contents, the timed reservation section 114 in the recording apparatus 110 reads reservation information stored in the reservation data management section 115, and displays a frame 1100 on the monitor 120 via the user interface section 111. On the frame 1100 are simultaneously displayed timed recording reservations of broadcast programs received from the VHF/UHF tuner section 113 built into the recording apparatus 110 and timed recording reservations of broadcast programs received by the satellite broadcast receivers 100a and 100b. The two are distinguished from each other by marking with 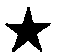 as indicated by 1110 in FIG. 8? or stating the name of the receiver.

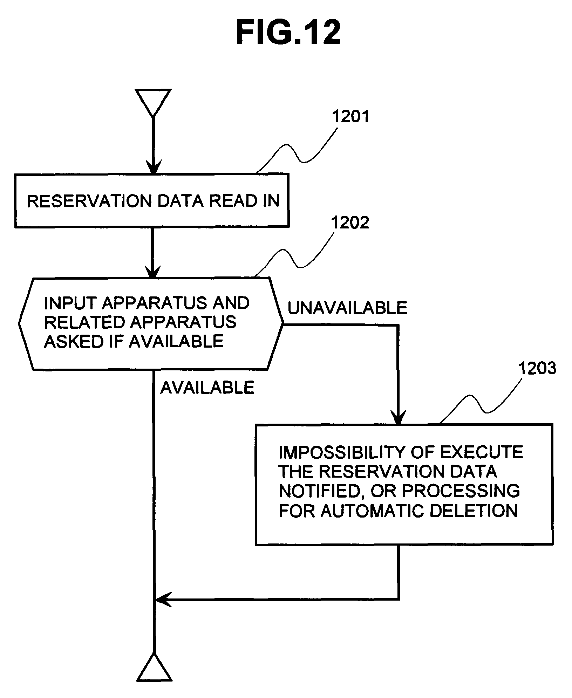

Next will be described, with reference to FIG. 12, the processing that is effected when the bus is reset or the configuration of the AV apparatus system is altered by, for instance, the withdrawal of any connected apparatus.

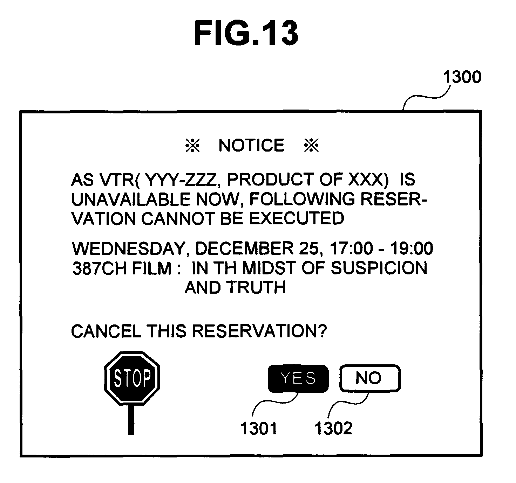

First the timed reservation sections 104 and 114 of the apparatuses having recognized the change in the configuration of the AV apparatus system read in reservation data 200 or 300 managed by the reservation data management sections 105 and 115 (step 1201), and check the contents of each. And, referring to the input apparatus ID 303 or the related apparatus ID 203 in the reservation data, if the values are other than those of their respective apparatus IDs, they inquire of the apparatus indicated by the input apparatus ID 303 or the related apparatus ID 203 about the state (presence, availability or the like) (step 1202). And if the result indicates that the apparatus inquired of is unavailable, the operator is notified of impossibility to execute the reservation data, and cancels the reservation or automatically deletes the reservation data (step 1203). This makes possible successful management of the reservation data even if the system configuration changes. FIG. 13 shows a frame example 1300 where a notice is given to the operator of the unavailability of the apparatus inquired about. If an option 1301 is designated on the frame 1300, the timed reservation sections 104 and 114 delete the reserved data. If an option 1302 is designated, the frame 1300 will remain displayed until the apparatus inquired about becomes available.

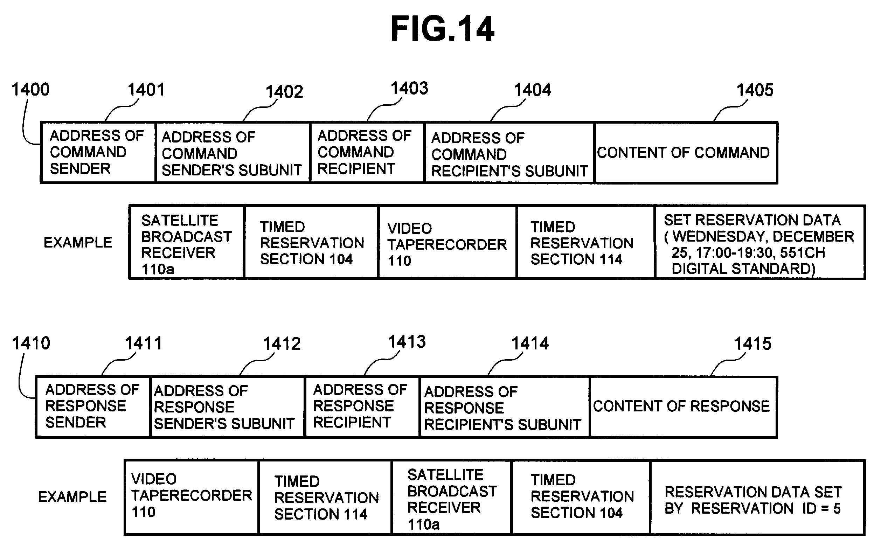

Next regarding the packet structure of control signals for transferring inquiries from the satellite broadcast receiver 100a to the recording apparatus 110 and the response from the recording apparatus 110 to the satellite broadcast receiver 100a on the bus 10 at step 503, step 505 and step 1202, one example of its configuration is shown in FIG. 14.

When setting or acquisition of reservation data is requested from the satellite broadcast receiver 100a to the recording apparatus 110, a command packet 1400 is used. The command packet 1400 consists of a command sender address 1401, a command sender's subunit address 1402, a command recipient address 1403, a command recipient's subunit address 1404, and a command content 1405.

The command sender address 1401 represents the only address of the apparatus issuing the transmission command on the bus 10, and in the case of this mode of implementation, it is the address of the satellite broadcast receiver 100a on the bus 10.

The command sender's subunit address 1402 is the address of an individual function (the tuner section, timed reservation section or the like) in the apparatus issuing commands. In the case of this mode of implementation, it is the address of the tuner section 104 in the satellite broadcast receiver 100a.

The command recipient address 1403 represents the only address of the apparatus receiving the command on the bus 10, and in the case of this mode of implementation, it is the address of the recording apparatus 110 on the bus 10.

The command recipient's subunit address 1404 is the address of an individual function (the tuner section, timed reservation section or the like) in the apparatus receiving commands. In the case of this mode of implementation, it is the address of the tuner section 114 in the recording apparatus 110.

The command content 1405 represents a request to the timed reservation section of the command recipient (in this case the timed reservation section 114 within the recording apparatus 110) for writing in, reading out or changing reservation data and its content.

On the other hand, responses from the recording apparatus 110 to the satellite broadcast receiver 100a uses a response packet 1410.

The response packet 1410 consists of a response sender address 1411, a response sender's subunit address 1412, a response recipient address 1413, a response recipient's subunit address 1414, and a response content 1415.

The response sender address 1411 represents the only address of the apparatus issuing the response on the bus 10, and in the case of this mode of implementation, it is the address of the recording apparatus 110 on the bus 10.

The response sender's subunit address 1412 is the address of an individual function (the tuner section, timed reservation section or the like) in the apparatus issuing responses. In the case of this mode of implementation, it is the address of the tuner section 114 in the recording apparatus 110.

The response recipient address 1413 represents the only address of the apparatus receiving the response on the bus 10, and in the case of this mode of implementation, it is the address of the satellite broadcast receiver 100a on the bus 10.

The response recipient's subunit address 1414 is the address of an individual function (the tuner section, timed reservation section or the like) in the apparatus receiving responses. In the case of this mode of implementation, it is the address of the tuner section 104 in the satellite broadcast receiver 100a.

The response content 1415 represents a response to the timed reservation section of the response recipient (in this case the timed reservation section 114 within the recording apparatus 110) to a request for writing in, reading out or altering reservation data, such as the contents or the result of alteration of the reservation data.

As described so far, according to this mode of implementation, in a system consisting of the satellite broadcast receivers 100a and 100b and the recording apparatus 110 connected to each other by the control bus 10, the timed reservation sections 104 and 114 including the reservation data management sections 105 and 115 are provided in the satellite broadcast receivers 100a and 100b and the recording apparatus 110, each of the executing apparatuses manages the reservations pertaining thereto out of all the timed reservations present on the bus 10.

For instance, if the satellite broadcast receiver 100a is instructed to make a timed reservation as referred to above, the timed reservation section 104 stores the contents of reservation data into the reservation data management section 105 and, at the same time, also processes their storage into the reservation data management section 115 of the recording apparatus 110 operating in conjunction.

This enables any other apparatus than the satellite broadcast receiver 100a and the recording apparatus 110, e.g. the satellite broadcast receiver 100b, if it is instructed to make a timed reservation in conjunction with the recording apparatus 110, to grasp all the reservations using the recording apparatus 110 existing on the bus 10 by only inquiring the reservation data management section 115 of the recording apparatus 110.

Furthermore, as will be described later in greater detail, if an instruction to make a timed reservation in conjunction with the satellite broadcast receiver 100a is received from another apparatus, it is possible to grasp all the reservations using the satellite broadcast receiver 100a existing on the bus 10 by only inquiring the reservation data management section 105 of the satellite broadcast receiver 100a.

Further, the reservation data to be stored in the reservation data management sections 105 and 115 are supposed to have a configuration including an input apparatus ID 303 or a related apparatus ID 203.

As this enables apparatuses having processed reservation data and apparatuses operating in conjunction to execute reservations to be identified, any reconfiguration of the system or processing to cancel a reservation in the event of conflict or alteration can be addressed more easily.

To discuss the mode of implementing a reservation hereupon, it is possible to adopt a configuration in which, when the time to execute a reservation comes, the satellite broadcast receiver 100a and the recording apparatus 110 can individually execute a reservation on the basis of the reservation data stored therein. It is further possible to equip the satellite broadcast receiver 100a with a function to remotely control the recording apparatus 110 so that, when the time to execute a reservation comes, the satellite broadcast receiver 100a can remotely control the recording apparatus 110 to execute the reservation. In this case, the reservation data 200 managed by the reservation data management section 105 in the satellite broadcast receiver 100a may include, in addition to the related apparatus ID 203, data indicating whether or nor to remotely control another apparatus.

Further the reservation data 300 managed by the reservation data management section 115 in the recording apparatus 110 may include, in addition to the input apparatus ID 303, data indicating whether or nor to be remotely controlled by another apparatus.

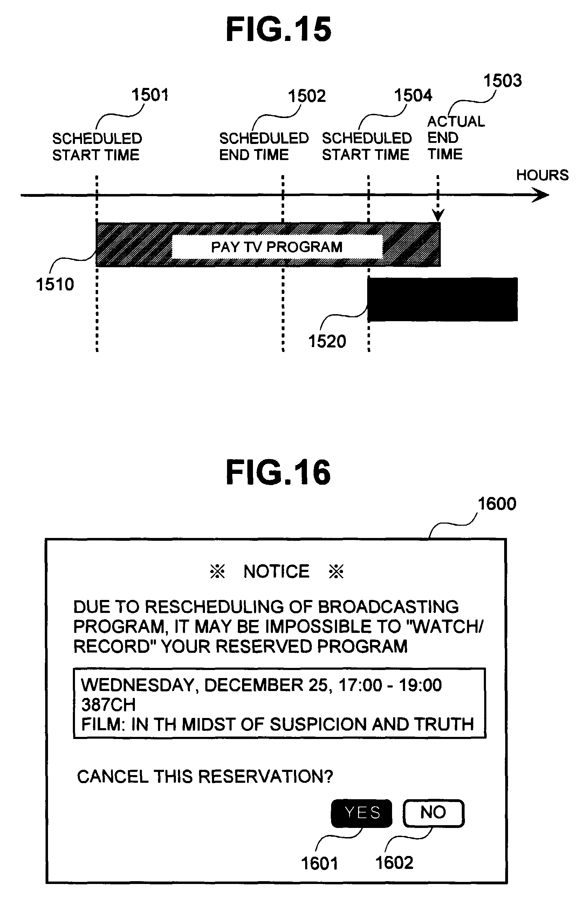

Next will be explained, with reference to FIG. 15, how a chargeable program, such as a satellite broadcast program, is to be recorded by timed reservation.

Following the above described procedure for timed reservation, the reservation data management section 105 in the satellite broadcast receiver 100a is supposed to store reservation data on a pay TV program 1510, such as a sportscast, from a scheduled starting time 1501 until a scheduled ending time 1502 and on another program 1520 from a scheduled starting time 1504 later than that.

A few minutes before the scheduled starting time 1501 of the reserved pay TV program 1510, the timed reservation section 104 acquires the latest program guide and the like, and checks if the program 1510 will start at its scheduled time.

There also is an alternative method here by which the timed reservation section 104 can acquire a new program guide at fixed intervals of time.

If the program 1510 starts as scheduled, it will start recording the program in conjunction with the recording apparatus 110 when the scheduled starting time 1501 comes.

On the other hand, if the program 1510 starts behind the schedule, it will acquire the ending time of the program, and check whether or not the ending time will conflict with the scheduled starting time 1504 of the later reserved program 1520. And if it will, the operator will be notified to that effect.

FIG. 16 shows a frame example 1600 displayed on the monitor 120. If an option 1601 is indicated on the frame 1600, the timed reservation section 104 in the satellite broadcast receiver 100a will change the reservation hours 202 in the reservation data 200 concerning the reserved program 1510, and delete the reservation data 200 concerning the reserved program 1520. At the same time, it will transmit to the timed reservation section 114 in the recording apparatus 110 a request for a change in the reservation hours 302 in the reservation data 300 concerning the reserved program 1510 and a request for deletion of the reservation data 200 concerning the reserved program 1520.

In response, the timed reservation section 114 in the recording apparatus 110 will change the reservation hours 302 in the reservation data 300 concerning the reserved program 1510 stored in the reservation data management section 115, and delete the reservation data 300 concerning the reserved program 1520. If an option 1602 is indicated, the reserved program 1520 will be recorded from the midway, but it is also possible for the operator to choose the program to be given priority.

Next, after the recording of the reserved program starts from its scheduled starting time 1501, a few minutes before its scheduled ending time 1502, the timed reservation section 104 of the satellite broadcast receiver 100a acquires the latest program guide and the like, and checks if the program 1510 will end at its scheduled time. There also is an alternative method here by which the timed reservation section 104 can acquire a new program guide at fixed intervals of time.

If the program 1510 ends as scheduled, it will complete recording the program in conjunction with the recording apparatus 110 when the scheduled ending time 1502 comes.

On the other hand, if the program 1510, as is usual with a sportscast for instance, is extended beyond the scheduled ending time, the timed reservation section 104 of the satellite broadcast receiver 100a will notify the operator to that effect by, for example, displaying the frame 1600 on the monitor 120. And if the option 1601 is indicated on the frame 1600, the timed reservation section 114 in the recording apparatus 110a will delete the reservation data 200 concerning the reserved program 1520, and transmit to the timed reservation section 114 in the recording apparatus 110 a request for a deletion of the reservation data 200 concerning the reserved program 1520.

Monitoring is continued until the end of the reserved program 1510, and upon completion of the program 1510 the fact is transmitted to the timed reservation section 114 in the recording apparatus 110. In response, the timed reservation section 114 in the recording apparatus 110 deletes the reservation data 300 concerning the reserved program 1520 stored in the reservation data management section 115. And recording is continued until a notice of the end of the program comes from the satellite broadcast receiver 100a. If the option 1602 is indicated, either the reserved program 1520 will be recorded from the midway, or the operator is let choose the program that is to be given priority.

This arrangement makes it possible to flexibly adapt to an unexpected extension of a reserved program. Although the operator is notified to have the reservation data 200 deleted in the example described above, it is also possible to predetermine the order of precedence when the reservation data 1510 are set and to have the timed reservation section automatically delete the reservation data 200 in the event of any unexpected change in the reservation data, such as an extension of the program.

Hereupon, although the satellite broadcast receiver 100a was the input apparatus and the recording apparatus 100? was the related apparatus in the above-described system configuration, a configuration in which the recording apparatus 110 is the input apparatus and the satellite broadcast receiver 100a is the related apparatus is also conceivable. In this case, the recording apparatus 110 instructs a timed reservation, and the reservation data are stored in the reservation data management section 115 within the recording apparatus 110 and the reservation data management section 105 within the satellite broadcast receiver 100a. The only difference is that the reservation data management section 115 within the recording apparatus 110 manages the reservation data 200, and the reservation data management section 105 within the satellite broadcast receiver 100a manages the reservation data 300, but the procedure of processing is similar to what was described with respect to the foregoing mode of implementation.

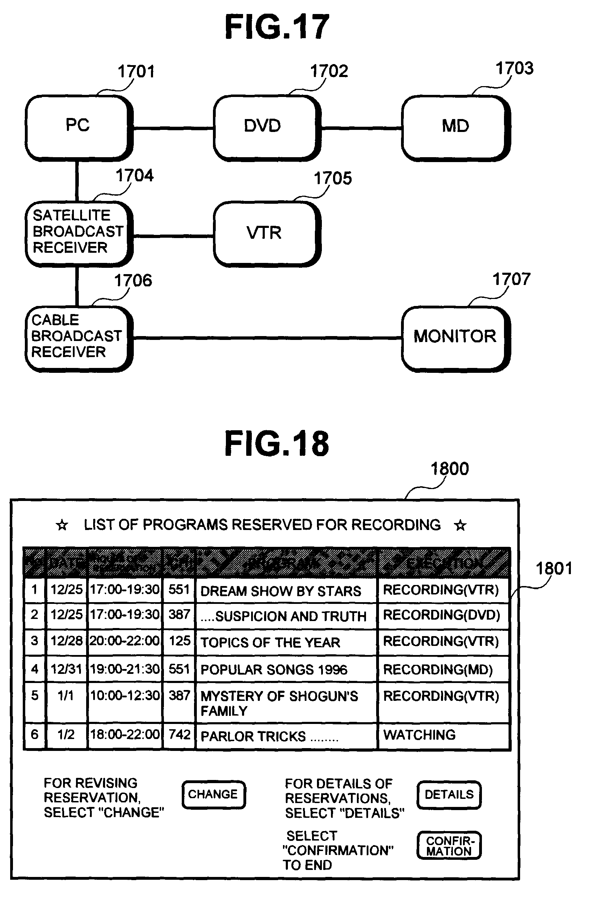

Next will be described the case of a system in which, as illustrated in FIG. 17, various apparatuses are connected to the bus.

The system consists of a personal computer (hereinafter PC) 1701, a DVD recording/playback apparatus 1702 for playing back or recording on DVDs, an MD recording/playback apparatus 1703 for playing back or recording on MDs, a satellite broadcast receiver 1704 for receiving satellite broadcasts, a VTR 1705 for playing back or recording on a magnetic tape, a cable broadcast receiver 1706 for receiving cable broadcasts, and a monitor 1707 for displaying AV data such as a TV.

Each of the apparatuses 1701 to 1704 is provided with a timer reservation section of the above-described kind. The apparatus serving as the input apparatus, when receiving a timed reservation instructed from the operator, generates reservation data 200 and stores them into the timed reservation section within the apparatus and, at the same time, requests a related apparatus operating in conjunction to generate reservation data 300 and store them into the timed reservation section within the apparatus. In this manner, the apparatus serving as the input apparatus, when trying to make a timed reservation with the targeted related apparatus, has to inquire only with the timed reservation section of the related apparatus if it is available or not.

FIG. 18 shows a program reservation list frame 1800 displayed to confirm the state of timed reservations for a satellite broadcast receiver 1704. On the frame 1800, the reservation data 200 managed by the timed reservation section are read out, and information on the reservation data 200 (date, reservation hours, channel, program title, and the function to be executed) is displayed. Hereupon, this system has, as apparatuses for video recording, the DVD 1702, the MD 1703 and the VTR 1705. On the frame 1800 is displayed, when the function to be executed is recording as indicated by 1801, which apparatus should perform recording with reference to the related apparatus ID 203 within the reservation data 200.

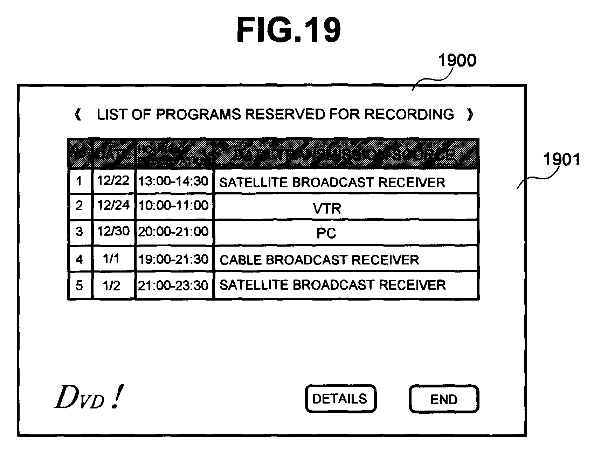

Similarly the DVD 1702 has, as apparatuses for supplying information, the PC 1701, the satellite broadcast receiver 1704 and a cable broadcast receiver 1706. Therefore, as shown in FIG. 19, in a frame 1900 displayed when the state of timed reservations is to be confirmed with the DVD 1702, it is also possible to display, with reference to the input apparatus ID 303 within the reservation data 300, information 1901 concerning apparatuses to supply reservation contents.

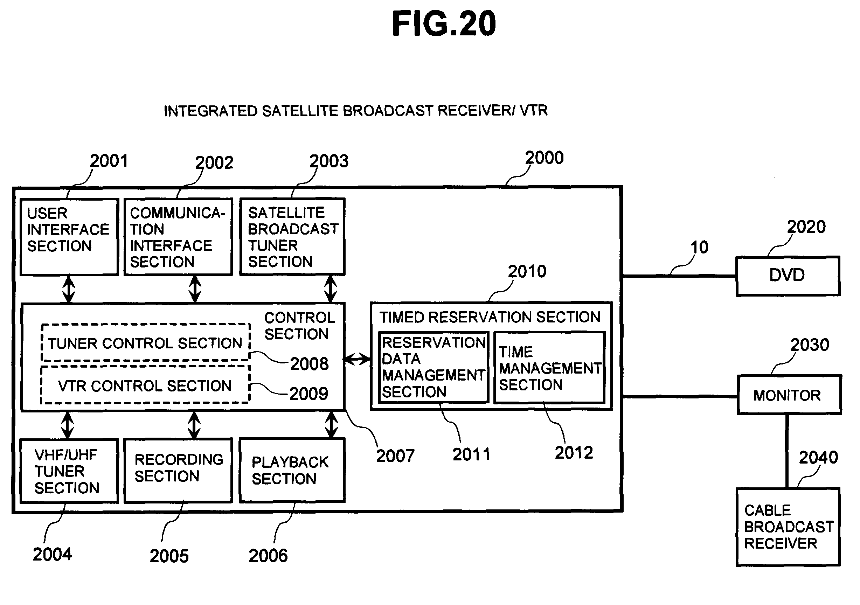

Further will be described a case in which, as illustrated in FIG. 20, a satellite broadcast receiver and a VTR are integrated to have functions as input and related apparatuses. This system consists of an integrated satellite broadcast receiver-VTR apparatus 2000, a DVD 2020, a monitor 2030 and a cable broadcast receiver 2040.

First will be described the configuration of the integrated satellite broadcast receiver-VTR apparatus 2000. The integrated apparatus 2000 consists of a user interface section 2001 for communicating recording or playback, timed reservation or display information with the operator using an input instructing device such as a remote control unit or a tablet, a communication interface section 2002 for communicating data and control signals with other apparatuses (a DVD 2020, a monitor 2030 and a cable broadcast receiver 2040 in this case) via the bus 10, a satellite broadcast tuner section 2003 for receiving satellite broadcasts, a VHF/UHF tuner section 2004 for receiving VHF/UHF broadcasts, a recording section 2005 for recording broadcast programs and the like on a magnetic tape, a playback section 2006 for playing back AV data on a magnetic tape or actually reproducing broadcast programs on the monitor 2030, a control section 2007 for controlling the actions of various constituent sections, and a timed reservation section 2010 for processing the timed reservation of satellite broadcast programs or VHF/UHF broadcast programs. Here the control section 2007 further consists of a tuner control section 2008 for effecting control to view satellite broadcasts and VHF/UHF broadcasts, and a VTR control section 2009 for effecting control to record or play back broadcast programs. Further the timed reservation section 2010 consists of, as described above, a reservation data management section 2011 and a time management section 2012.

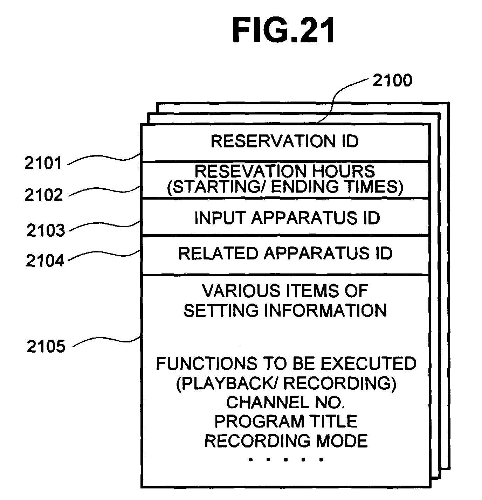

The integrated apparatus 2000, when a broadcast program is to undergo timed recording on the DVD 2020, can operate as the input apparatus, or when a program received by the cable broadcast receiver 2040 is to undergo timed recording by the integrated apparatus 2000, can operate as a related apparatus. An example of configuration of the reservation data to be managed by the reservation data management section 2011 in this case is shown in FIG. 21.

The reservation data 2100 consists of a reservation ID 2101, reservation hours (starting/ending times) 2102, an input apparatus ID 2103, a related apparatus ID 2104, and various setting information 2105.

The reservation ID 2101 is the only identifier for identifying reservation data managed by the reservation data management section 2011. The reservation hours 2102 are the requested reservation input reservation hours (starting/ending times).

The input apparatus ID 2103 is the only identifier of the apparatus accepting and executing reservations on the bus 10. When a broadcast program is to undergo timed recording on the DVD 2020, since the input apparatus is the integrated apparatus 2000, the ID of the integrated type is set. When a program received by the cable broadcast receiver 2040 is to undergo timed recording by the integrated apparatus 2000, since the input apparatus is the cable broadcast receiver 2040, the ID of the cable broadcast receiver 2040 is set.

The related apparatus ID 2104 is the only identifier of the apparatus operating in conjunction on a reservation on the bus 10. When a broadcast program is to undergo timed recording on the DVD 2020, since the input apparatus is the DVD 2020, the ID of the DVD is set. When a program received by the cable broadcast receiver 2040 is to undergo timed recording by the integrated apparatus 2000, since the input apparatus is the integrated apparatus 2000, the ID of the integrated apparatus 2000 is set.

The various set information 2105 includes various items of information needed to setting and executing a timed reservation such as the function to be executed, i.e. playback or recording, channel number, recording speed, i.e. SP, LP or EP, and the recording mode, i.e. analog or digital.

The foregoing arrangement makes it possible, by having the reservation data management section 2011 manage the reservation data 2100 including the ID 2103 of the input apparatus to accept and execute reservations and the ID 2104 of the related apparatus operating in conjunction, to grasp where a reservation is executed, with which apparatus operation takes place in conjunction, and thereby facilitates the management of timed reservations between apparatuses.

Further, when a timed reservation is to be made, time adjustment among apparatuses is required. Therefore, a conceivable method is to use, in the above-described timed reservation system, an apparatus responsible for the control of the bandwidth and channel of synchronous transfers on the bus and power management (e.g. an apparatus equipped with a bus manager or an isochronous resource manager in a system using IEEE 1394 and serving as the route) or an apparatus, such as a tuner, capable of acquiring time information from an outside broadcasting station or the like and making time adjustment on that basis is used as the input apparatus for the time management section 106 or 116, and periodically accomplish time adjustment among the apparatuses connected on the bus.

Another conceivable method is to let any apparatus operating in conjunction with the apparatus executing a timed reservation request, when a timed reservation is instructed, the timer inputting apparatus to carry out time adjustment or acquire time and accomplish adjustment for itself.

As hitherto described, a feature of the present invention consists in that, when an instruction of timed reservation is inputted to an AV apparatus to serve as the input apparatus, it sets in its own timed reservation section the necessary reservation data, and at the same time sets the necessary reservation data in the related apparatus as well. This arrangement enables each apparatus to flexibly respond to the setting of a timed reservation in any other apparatus than itself.

### Industrial Applicability

The technique for apparatus use pertaining to the present invention is suitable for avoiding conflicts in the use of apparatuses and harmonizing the use of apparatuses on a bus, because each AV apparatus is enabled to grasp all information relevant to itself, out of the information on the use of all the apparatuses present on the bus, set in other AV apparatuses than itself, making it possible to acquire all information on the use of apparatuses present on the bus and concerning related apparatuses by inquiring only of the related apparatus it controls about the particulars of its bus use.

## Claims

1. An AV apparatus capable of transmitting or receiving information to and from any other AV apparatus via a bus, characterized in that it is provided with a means for transmitting information to request storage of apparatus use information to any other AV apparatus to which transmission, or from which reception, of information via said bus is intended.

2. An AV apparatus, as stated in Claim 1, characterized in that it is provided with a means for setting apparatus use information to have transmission or reception of video information or audio information to or from any other AV apparatus accomplished in a desired period of time.

3. An AV apparatus, as stated in Claim 1 or 2, characterized in that it is provided with a means for storing said apparatus use information.

4. An AV apparatus, as stated in Claim 1, 2 or 3, characterized in that it is provided with a means for receiving, in response to said request for storage, information transmitted from said other apparatus via said bus on whether or not said apparatus use information can be stored.

5. An AV apparatus, as stated in Claim 1, 2 or 3, characterized in that it is provided with a means for receiving, in response to said request for storage, apparatus use information on said other AV apparatus transmitted from said other apparatus via said bus.

6. An AV apparatus, as stated in Claim 4 or 5, characterized in that it is provided with a means for transmitting, when said other AV apparatus can store said apparatus use information, said apparatus use information to said other AV apparatus via said bus.

7. An AV apparatus, as stated in Claim 4, 5 or 6, characterized in that it is provided with a means for transmitting information on whether or not said other AV apparatus can store said apparatus use information to a display means, and said display means display said information on whether or not storage is possible.

8. An AV apparatus, as stated in any one of Claims 1 through 5, characterized in that it is provided with a means for transmitting to said other AV apparatus via said bus said apparatus use information together with said information to request storage.

9. An AV apparatus, as stated in any one of Claims 4 through 8, characterized in that it is provided with a means for transmitting to said other AV apparatus via said bus, when said other AV apparatus cannot store said apparatus use information, information to request transmission of apparatus use information conflicting with said apparatus use information.

10. An AV apparatus, as stated in Claim 9, characterized in that it is provided with a means for receiving said conflicting apparatus use information from said other AV apparatus via said bus.

11. An AV apparatus, as stated in any one of Claims 9 or 10, characterized in that it is provided with a means for transmitting said conflicting apparatus use information to the display means, and said display means displays said conflicting apparatus use information.

12. An AV apparatus, as stated in claim 9, 10 or 11, characterized in that it is provided with a means for deciding, when information that storage is impossible has been received, which of conflicting sets of apparatus use information is to be given priority.

13. An AV apparatus, as stated in any one of Claims 3 or 12, characterized in that it is provided with a means for reading said apparatus use information out of the means to store said apparatus use information, and a means for altering the apparatus use information that has been read out.

14. An AV apparatus capable of transmitting or receiving information to or from any other AV apparatus via a bus characterized in that it is provided with means to determine whether or not such use as is indicated in apparatus use information transmitted from said other AV apparatus via said bus or on intended transmission or reception of video information or audio signals with said other AV apparatus is possible.

15. An AV apparatus, as stated in Claim 14, characterized in that it is provided with a means for storing said apparatus use information and, if the use of the apparatus indicated by said apparatus use information is possible, the apparatus use information transmitted from said other AV apparatus is stored.

16. An AV apparatus, as stated in any one of Claims 14 or 15, characterized in that it is provided with a means for transmitting, if the use of the apparatus indicated by said apparatus use information is impossible, information indicating the impossibility to use to said other AV apparatus via said bus.

17. An AV apparatus, as stated in Claim 16, characterized in that the means for transmitting said information indicating the impossibility to use transmits information indicating the reason for the impossibility to use together with said information indicating the impossibility to use.

18. An AV apparatus, as stated in Claims 15, 16 or 17, characterized in that it is provided with a means for reading said apparatus use information out of means for storing apparatus use information, and a means for altering the apparatus use information that has been read out.

19. An AV apparatus, as stated in any one of Claim 18, characterized in that it is provided with a means for transmitting said apparatus use information that has been read out to a display means, and
the display means reads out said apparatus use information.

20. An AV apparatus, as stated in any one of Claims 1 through 19, characterized in that the information to request storage of said apparatus use information is information containing at least the starting time of said other AV apparatus and the ending time of the intended use of said other AV apparatus.

21. A method for apparatus use characterized in that, out of at least two bus-connected AV apparatuses, a first AV apparatus requests via said bus a second AV apparatus, intending to transmit or receive video information or audio information, to store apparatus use information indicating the intention to use the second AV apparatus, and
said second AV apparatus determines whether or not the use indicated by said apparatus use information is possible.

22. A method for apparatus use characterized in that, out of at least two bus-connected AV apparatuses, a first AV apparatus requests via said bus a second AV apparatus, intending to transmit or receive video information or audio information, to store apparatus use information indicating the intention to use the second AV apparatus,
said second AV apparatus transmits to said first AV apparatus via said bus the apparatus use information it already has, and
said first AV apparatus determines, on the basis of said apparatus use information and apparatus use information transmitted from said second AV apparatus, whether or not the use by said second AV apparatus on the basis of said apparatus use information is possible.

23. A method for apparatus use, as claimed in Claim 21 or 22, characterized in that, if the use by said second AV apparatus as indicated by said apparatus use information is possible, said first AV apparatus transmits said apparatus use information via said bus to said second AV apparatus.

24. A method for apparatus use, as claimed in Claim 23, characterized in that, if the use by said second AV apparatus as indicated by said apparatus use information is possible, said first AV apparatus and said second AV apparatus store said apparatus use information.

25. A method for apparatus use, as claimed in Claim 21 or 22, characterized in that, if the use by said second AV apparatus as indicated by said apparatus use information is impossible, said second AV apparatus transmits, via said bus to said first AV apparatus, information indicating that the use indicated by said apparatus use information is impossible.

26. A method for apparatus use, as claimed in Claim 21 or 22, characterized in that, if the use by said other AV apparatus as indicated by said apparatus use information is impossible, said second AV apparatus transmits, via said bus to said first AV apparatus, apparatus use information constituting the cause for the impossibility to use as indicated by said apparatus use information together with information indicating the impossibility to use as indicated by said apparatus use information.

27. A method for apparatus use, as claimed in Claim 26, characterized in that said conflicting sets of apparatus use information is transmitted to a display means, and said display means displays said conflicting sets of apparatus use information.

28. A method for apparatus use, as claimed in Claim 26 or 27, characterized in that, if said information of impossibility to store is received, either of the conflicting sets of apparatus use information is given priority.

29. A method for apparatus use, as claimed in any one of Claims 24 through 28, characterized in that said apparatus use information is read out, and apparatus use information that has been read out is altered.

30. A method for apparatus use, as claimed in any one of Claims 21 through 29, characterized in that, when requesting storage of said apparatus use information, information is transmitted which contains at least the starting time of said second AV apparatus and the ending time of the intended use of said second AV apparatus.

31. An AV apparatus system consisting of a plurality of bus-connected AV apparatuses, characterized in that:
a first AV apparatus out of said AV apparatuses transmits to a second AV apparatus, to or from which the first AV apparatus intends to transmit or receive video information or audio information via said bus, apparatus use information indicating the intended use of the second AV apparatus, and
said second AV apparatus, if the use indicated by said apparatus use information is possible, stores said apparatus use information or, if the use of the bus indicated by said apparatus use information is impossible, transmits information of the impossibility to use the bus to said first AV apparatus via the bus.

32. An AV apparatus system consisting of a plurality of bus-connected AV apparatuses, characterized in that:
if the system configuration is altered by the new addition of or removal of any AV apparatus,
a first AV apparatus out of said AV apparatus system reads out apparatus use information it stores, and
on the basis of apparatus use information, at least one second AV apparatus transmitting or receiving video signals or audio signals to or from the first AV apparatus is checked for the possibility or impossibility of the use indicated by said apparatus use information.

33. An AV apparatus system, as stated in Claim 32, characterized in that said apparatus use information is deleted if the use indicated by said apparatus use information is impossible.

34. An AV apparatus system, as stated in Claim 31, 32 or 33, characterized in that said plurality of AV apparatuses performs time adjustment.

35. An AV apparatus system, as stated in any of Claims 31 through 34, characterized in that said apparatus use information is information containing at least the ID of said second AV apparatus, the starting time of said second AV apparatus and the ending time of the intended use of said second AV apparatus.

36. An AV apparatus characterized in that it is provided with a means for setting information on the intended use of any other AV apparatus, and a means for checking with said other AV apparatus via a bus whether or not the use indicated by said information is possible, wherein:
if the use indicated by said information is impossible, information indicating the impossibility is displayed on a display means.

37. A method for apparatus use characterized in that information on the intended use of any other AV apparatus is set, and the possibility or impossibility of the use indicated by said information is checked with said other AV apparatus via a bus, and
if the use indicated by said information is impossible, information indicating the impossibility is displayed.

38. An AV apparatus system consisting of a plurality of bus-connected AV apparatuses, characterized in that:
apparatus use information pertaining to a first AV apparatus out of said AV apparatuses is stored by said first AV apparatus and at least one second apparatus intending to transmit or receive video information or audio information to or from said first AV apparatus, and
when a third AV apparatus is to transmit or receive video information or audio information to or from said first AV apparatus or said second AV apparatus, the state of use of said first AV apparatus and said second AV apparatus is grasped by inquiring of only either of said first AV apparatus and second AV apparatus for said apparatus use information.
